# EUROPEAN PATENT APPLICATION

(11) **EP 1 132 861 A2**
(43) Date of publication of application: **12.09.2001**
(21) Application number: 01301967.4
(22) Date of filing: 05.03.2001
(51) Int. Cl.: G06K 19/077

(54) **Ic tag and method for production thereof**

(30) Priority: 10.03.2000 JP 2000066359
(71) Applicant: SHINKO ELECTRIC INDUSTRIES CO. LTD., Nagano-shi, Nagano 380-0921 (JP)
(72) Inventor: Higuchi, Tutomu, Shinko Electric Ind. Co.,ltd., Nagono-shi, Nagano 380-0921 (JP)
(74) Representative: Rackham, Stephen Neil

(57) **Abstract**

An IC tag includes a plane coil (20) which is made by a conductor wire (18) coated with an insulator wound several times in a plane, the plane coil (20) having terminal portions and defining a central vacant area encircled by the wound wires. A semiconductor element (14) is arranged in the central vacant area and placed in the plane and has a thickness substantially the same as or smaller than the thickness of the plane coil (20). The semiconductor element (14) has electrodes which are electrically connected to the terminal portions of the plane coil (20).

## Description

The present invention relates to an IC tag or a unit electronics module including a semiconductor element and an antenna coil electrically connected to the semiconductor element, hereinafter referred simply to an "IC tag", and also relates to a method for the production such an IC tag.

The IC tag is constituted by mounting a semiconductor element onto a substrate in which an antenna circuit is formed, and is capable of readily identifying an article, or another item, carrying the IC tag by the identification data stored therein. Since the IC tags are identifiable in a non-contact manner, they are conveniently and efficiently usable. Also, since a larger amount of information can be stored in the IC tag than in other identification means such as bar codes, a large number of articles can be effectively identified in comparison with the latter. In fact, for example, a large amount of freight has conventionally been classified in the transport industry by attaching an IC tag to each piece of the freight.

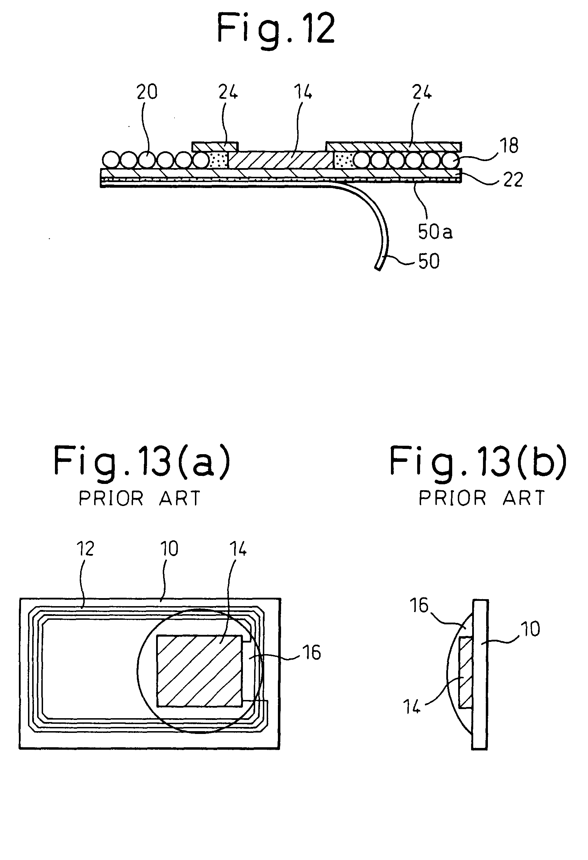

Fig. 13 shows one example of prior art IC tags. In this IC tag, an antenna pattern 12 is formed in an area of a rectangular substrate 10, and a semiconductor element 14 mounted on the substrate 10 is electrically connected to the antenna pattern 12. The semiconductor element 14 is shielded with resin 16. The substrate 10 may be a printed circuit board, a film substrate or the like.

Since the IC tags are generally disposable and consumed in large numbers, it is desired that they can be easily produced at low cost. In this respect, the above-mentioned prior art IC tag has a drawback in that an etching process is necessary for forming the antenna pattern 12. This means that the production cost for producing the IC tags cannot be lowered. More specifically, a method wherein a substrate clad with copper on one side thereof is used and the copper is etched to form the antenna pattern 12 is improper as a method for extremely inexpensively producing the IC tag although it is simple as a production process.

Also, since the IC tags may be used for various applications, it is required to form the IC tag as small and thin as possible. For example, if the IC tag were as small in size as a postage stamp, it would be possible to adhere the IC tag to an article like a postage stamp. Contrarily, since the prior art IC tag is of a structure wherein the semiconductor element 14 is mounted onto the substrate 10, there is a lower limit to the size of the IC tag.

The present invention has been made to solve the above drawbacks in the prior art IC tags. Accordingly, an object of the present invention is to provide an IC tag which is thinner, smaller and more compact in size and can be produced at a lower cost than the prior art IC tag, and to provide a method for the production thereof.

According to the present invention, there is provided an IC tag comprising: a plane coil comprising a conductor wire coated with an electrically insulating layer, the wire being wound several times in a plane to form a spiral loop of wire, the plane coil having respective terminal portions and defining a central vacant area encircled by the wound wire; and a semiconductor element having a thickness substantially same as a thickness of the plane coil and arranged in the central vacant area in the plane, the semiconductor element having electrodes which are electrically connected to the respective terminal portions of the plane coil.

The semiconductor element may be accommodated in a protective frame, which has a thickness substantially same as the thickness of the semiconductor element, and may be flatly arranged in the central vacant area of the plane coil.

The semiconductor element may be supported on and adhered to one of surfaces of an adhesive film to which the plane coil is also adhered.

The adhesive film may have first and second adhesive layers on the respective surfaces thereof, and the plane coil and the semiconductor element may be adhered to the first adhesive layer, while the second adhesive layer is covered with a removable film.

The semiconductor element may be held in position by means of a resin filled in a gap between an outer circumference of the semiconductor element and an inner periphery of the plane coil.

The semiconductor element may be supported in position only by a tightening force of the plane coil.

The wire of the plane coil may be wound in such a manner that adjacent loops of wire are in contact with each other.

The wire of the plane coil may be further coated with a hot-melting or fusing layer so as to cover the electrically insulating layer of the wire, so that the adjacent loops of wire are tightly connected to each other by means of the hot-melted or fused layer.

Adjacent loops of wire may be tightly connected to each other by means of a resin which is filled in a gap between outer surfaces of the loops of wire.

The electrodes of the semiconductor element may be electrically connected to the terminal portions of the plane coil by means of a connecting pattern formed with an electrically conductive paste.

According to another aspect of the present invention, there is provided a method of producing an IC tag comprising the following steps of: winding a conductor wire coated with an insulator several times in a plane so as to form a plane coil to define a spiral loop of wire and a central vacant area encircled by the wound wire in which a semiconductor element can be arranged; adhering a support film to one of surfaces of the plane coil so as to cover at least central vacant area; arranging the semiconductor element in the central vacant area of the plane coil so that the semiconductor element is supported by the support film; and electrically connecting the semiconductor element to the plane coil.

According to a still another aspect of the present invention there is provided a method of producing an IC tag comprising the following steps of: clamping a semiconductor element in a thickness direction thereof between a pair of flat clamping jigs;
forming a plane coil by winding a conductor wire coated with an insulator several times within a gap defined between the pair of clamping jigs around an outer circumference of the semiconductor element while it is being clamped by the jigs so that adjacent loops of wire are in contact with each other; and electrically connecting the semiconductor element to the plane coil.

According to further aspect of the present invention, there is provided a method of producing an IC tag comprising the following steps of: clamping a semiconductor element and a protective frame in a thickness direction thereof between a pair of flat clamping jigs in such a manner that the semiconductor element is encircled by the protective frame; forming a plane coil by winding a conductor wire coated with an insulator several times within a gap defined between the pair of clamping jigs around an outer circumference of the protective frame during the frame is being clamped by the jigs so that adjacent loops of wire are in contact with each other; and electrically connecting the semiconductor element to the plane coil.

Particular embodiments in accordance with this invention will now be described with reference to the accompanying drawings; in which:-
Figs. 1(a) and 1(b) are a plan view and a sectional view, respectively, of an IC tag according to the present invention;
Figs. 2(a) to 2(c) are plan views, respectively, for illustrating processes for producing the IC tag according to the present invention;
Figs. 3(a) to 3(d) are sectional views, respectively, for illustrating processes for producing the IC tag according to the present invention;
Fig. 4 illustrates a method for producing the IC tag according to the present invention;
Fig. 5 is a sectional view showing that wire portions of the IC tag are bonded to each other;
Figs. 6(a) and 6(b) are a plan view and a sectional view, respectively, of a core in which a semiconductor element is protected by a protection frame;
Fig. 7 illustrates a method for winding a wire on the core in which the semiconductor element is protected by the protection frame;
Fig. 8 is a plan view of another embodiment of an IC tag according to the present invention;
Figs. 9(a) and 9(b) illustrate another method for producing the IC tag according to the present invention;
Fig. 10 is a sectional view of a further embodiment of an IC tag according to the present invention;
Fig. 11 is a plan view of the further embodiment of the IC tag according to the present invention; can
Fig. 12 is a sectional view of an IC tag which can be adhered to an article according to the present invention; and
Figs. 13(a) and 13(b) are a plan view and a side view, respectively, of a prior art IC tag.

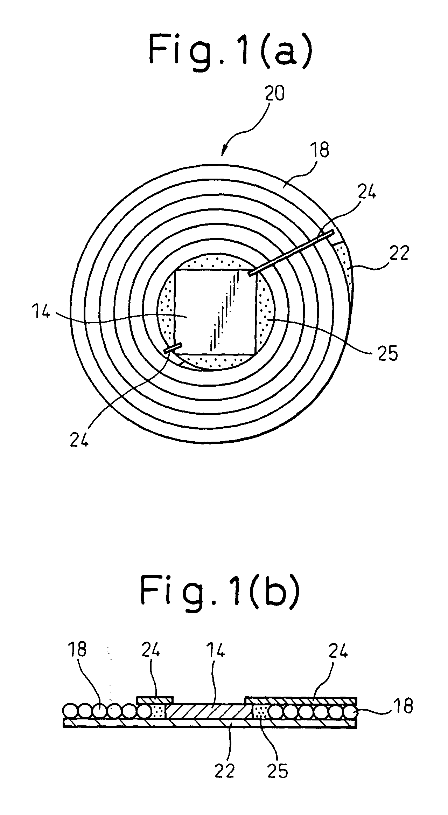

Figs. 1(a) and 1(b) illustrate a plan view and a sectional view of a first embodiment of an IC tag according to the present invention. The IC tag of this embodiment is of a structure in which a plane coil 20 formed by flatly winding a wire 18 around the outer circumference of a thin semiconductor element 14 in the same plane as that of the semiconductor element 14. As shown in Fig. 1(b), a diameter of the wire 18 forming the plane coil 20 is selected to be generally equal to or less than a thickness of the semiconductor element 14, and the semiconductor element 14 is accommodated in a vacant space defined at a center of the plane coil 20. Thus, the IC tag can be formed as a planar body which is small in total size.

Reference numeral 22 denotes a carrier film for supporting the semiconductor element 14 while accommodating the same within a central vacant space of the plane coil 20. The carrier film 22 is adhered to one side of the plane coil 20 to cover substantially all the side. The semiconductor element 14 is adhesively supported by the carrier film 22. Reference numeral 24 denotes connection patterns for electrically connecting terminals of the semiconductor element 14 with opposite ends of the plane coil 20, respectively. The connection patterns 24 are formed between the semiconductor elements 14 and the opposite ends of the plane coil 20 by linearly coating an electro-conductive paste. The electro-conductive paste is a resinous material such as epoxy or polyimide containing an electro-conductive filler such as silver. Reference numeral 25 denotes a protective resin filled in a gap formed between an outer circumference of the semiconductor element 14 and an inner circumference of the plane coil 20.

The plane coil 20 disposed on the circumference of the semiconductor element 14 acts as an antenna pattern, through which information stored in the semiconductor element 14 is detected and identified in a non-contact manner by an external detector. A function of the plane coil 20 as an antenna pattern is optionally adjustable by suitably selecting the number of windings (loops) of the plane coil 20, an area of the plane coil 20, a diameter of the wire 18 used for the plane coil 20 or other factors.

The IC tag according to this embodiment can be formed in an extremely small size because the plane coil 20 is disposed in the vicinity of the semiconductor element 14. Also, since the plane coil 20 is formed by closely winding a wire 18 so that any portion of the wire 18 is brought into contact with other portion thereof, the antenna pattern can be arranged at a high density, which further facilitates the compactness of the IC tag. In addition, since the plane coil 20 is arranged in the same plane as the semiconductor element 14 and formed generally equal to or smaller than the semiconductor element 14 in thickness, it is possible to have an extremely thin IC tag. Semiconductor elements 14 as thin as 50 to 100 µm are available nowadays, and those of such a small thickness can be used for providing convenient IC tags usable as a seal to be adhered to articles.

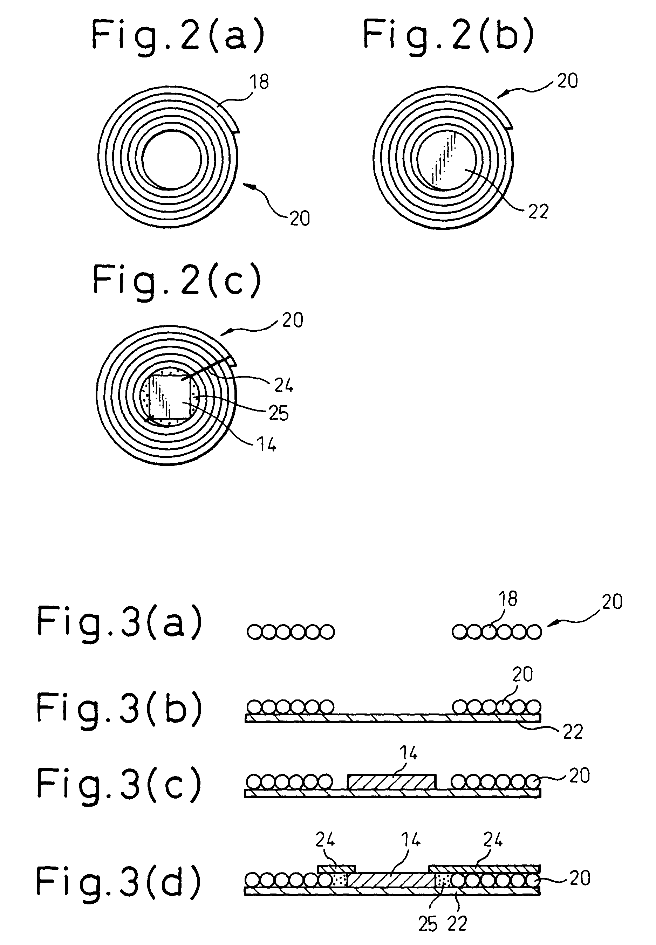

Figs. 2 and 3 show a method for producing the above-mentioned IC tag. That is, according to this method for the production of IC tag, a wire 18 is first wound to form a plane coil 20. Figs. 2(a) and 3(a) are plan view and a sectional view, respectively, of the plane coil 20 thus formed. The plane coil 20 is formed in one plane to have a vacant space at a center thereof for accommodating the semiconductor element 14.

Figs. 2(b) and 3(b) are a plan view and a sectional view, respectively, showing a state wherein a carrier film 22 is adhered to one side of the plane coil 20 to cover generally all the side. The carrier film 22 has an adhesive layer on the side to be adhered to the plane coil 20 and must be adhered to the plane coil 20 to cover at least the vacant space formed at the center thereof.

Fig. 3(c) is a sectional view showing a state wherein the semiconductor element 14 is then mounted to the vacant space formed at the center of the plane coil 20. The semiconductor element 14 is supported by the carrier film 22 while adhered thereto via the adhesive layer. Figs. 2(c) and 3(d) are a plan view and a sectional view, respectively, of a state wherein terminals of the semiconductor element 14 are electrically connected to opposite ends of the plane coil 20, respectively, via connection patterns 24. As described hereinbefore, the connection patterns 24 may be formed by linearly coating an electro-conductive paste. Instead of coating the electro-conductive paste, the terminals of the semiconductor element 14 may be wire-bonded to the ends of the plane coil 20. Alternatively, a film having a conductor pattern on one side thereof may be adhered to the plane coil 20 with the semiconductor element 14 being electrically connected to the respective ends of the plane coil 20 via the conductor pattern.

In this respect, when the protective resin 25 is filled between the outer circumference of the semiconductor element 14 and the inner circumference of the plane coil 20, the semiconductor element 14 is further securely fixed, although this resin 25 is not indispensable. To further protect the semiconductor element 14, there is also another method in that, after the semiconductor element 14 has been mounted to the carrier film 22 and the connection patterns 24 have been formed, a resin film may be adhered to the side of the semiconductor element 14 on which the connection patterns 24 are formed, to cover the semiconductor element 14 and the plane coil 20. A suitable method may be selected from these methods, as mentioned above, in view of the production cost, or other factors, of the IC tag.

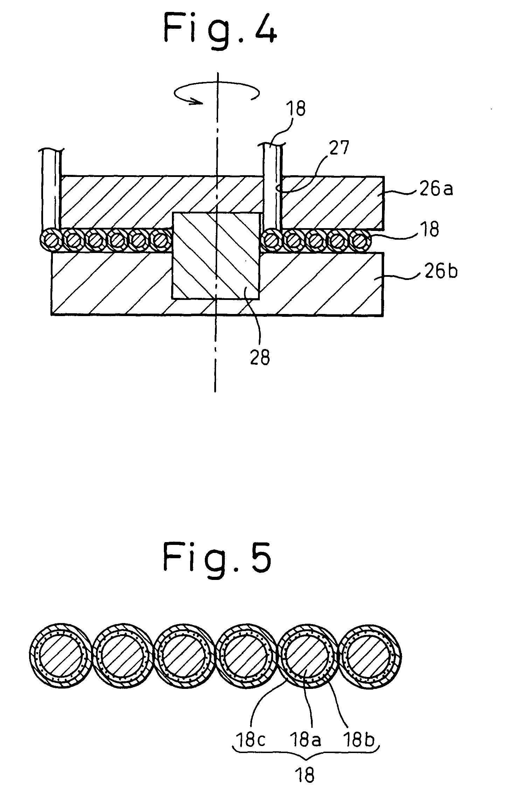

Figs. 4 and 5 show a method for forming the plane coil 20 from the wire 18.

In Fig. 4, a pair of jigs 26a, 26b are used for forming the plane coil 20, wherein a core block 28 is fixed at a center of the lower jig 26b to support the upper jig 26a to be movable relative to the lower jig in the opening and closing direction. The jigs 26a, 26b and the core block 28 are driven to rotate as a whole about a center line by means of a rotating mechanism. The jigs 26a, 26b are formed to have opposed flat surfaces between which is defined a gap allowing a single wire 18 alone to pass therethrough when the jigs are in the closed state.

The core block 28 is provided for the purpose of providing the vacant space for accommodating the semiconductor element 14 at a center of the plane coil 20. Reference numeral 27 denotes a fixation hole formed at a position on the upper jig 26a closer to the center thereof. One end of the wire 18 is inserted into the fixation hole 27 and secured thereto.

The method for forming the plane coil 20 by the jigs 26a, 26b according to this embodiment is as follows; one end of the wire 18 is inserted into the fixation hole 27 and secured thereto, and the jigs 26a, 26b and the core block 28 are driven to rotate about the center line while the jigs 26a, 26b are in the closed state, whereby the wire 18 is sequentially drawn into the gap and wound around the outer circumference of the preceding loop portion of the wire on the core block 28 to form a plane coil 20.

Such a wire is used for the wire 18 in this embodiment as consisting of a copper core 18a covered with an electro-insulating layer 18b such as polyurethane which is further covered with a hot-melting or fusing layer 18c such as polyamide. After the plane coil 20 has been formed, the wire 18 is heated so that the adjacent wire portions are bonded to each other via the fusing layer 18c. The plane coil 20 shown in Figs. 2(a) and 3(a) is a coil wherein the wire 18 is wound in a planar form and heated so that the adjacent portions are fusion-bonded together.

Even in a state wherein the adjacent wire portions of the wire 18 are bonded together via the fusing layer 18c, the wire 18 is covered with the electro-insulating layer 18b to prevent a short-circuit between the adjacent portions of the wire 18 from occurring. Also when the connection patterns 24 are formed by using the electro-conductive paste, the short-circuit between the adjacent portions of the wire 18 is avoidable since the wire is covered with the electro-insulating layer 18b.

In this regard, if the short-circuit is assuredly avoidable between the adjacent portions of the wire 18 by the fusing layer 18c alone, it is unnecessary to provide the electro-insulating layer 18b on the core 18a.

By heating the jigs 26a and 26b before the wire 18 is flatly wound to form the plane coil 20, it is possible to bond the adjacent portions of the plane coil 20, via the fusing layer 18c, with each other.

Also, the wire 18 solely provided with the electro-insulating layer 18b on the outer circumference of the core 18a may be used while coating a fixing adhesive on the wire 18 during the formation of the plane coil 20 by rotating the jigs 26a, 26b and the core block 28 to result in the integral plane coil 20.

In the IC tag of the above-mentioned embodiment, the semiconductor element 14 is mounted after the plane coil 20 having the vacant space has been formed. However, the plane coil 20 may be formed while using the semiconductor 14 itself or a protective frame 30 protecting the outer circumference of the semiconductor element 14 as a core for forming the plane coil 20.

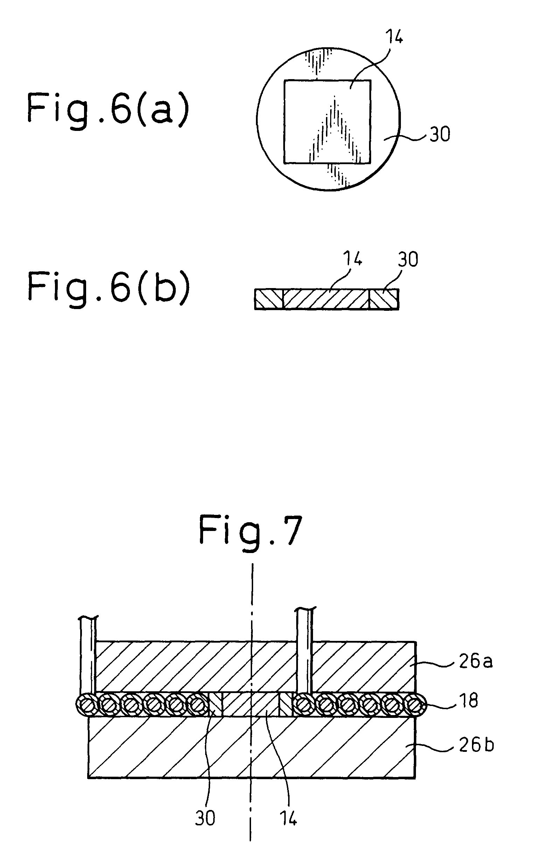

Figs. 6(a) and 6(b) show a core wherein the protective frame 30 is attached to the outer circumference of the semiconductor element 14. The protective frame 30 has substantially the same thickness as the semiconductor element 14 and is provided at a center thereof with a hole for accommodating the semiconductor element 14. Although the contour of the protective frame 30 is circular in this embodiment, it is not limited thereto but may be, for example, rectangular and similar to the outline of the semiconductor element 14. Also, the protective frame 30 may be formed of any material provided that it has a sufficient strength to protect the semiconductor element 14, such as polyethylene terephthalate, polycarbonate or ferrite.

Fig. 7 illustrates a method for forming the plane coil 20 while using the semiconductor element 14, the outer circumference of which is protected by the protective frame 30, as a core, wherein the core is clamped by the pair of jigs 26a, 26b and the wire 18 is flatly wound around the core in a similar manner as in Fig. 4.

By winding the wire 18 around the core in which the outer circumference of the semiconductor element 14 is protected by the protective frame 30, the core is held by a fastening force of the plane coil 20 so that a product, wherein the semiconductor element 14 is integral with the plane coil 20, is obtainable. If the wire 18 has the fusing layer 18c on the outer side thereof, the integrity of the semiconductor element 14 and the plane coil 20 is further enhanced by heating the assembly thereof because the plane coil 20 is fusion-bonded to the protective frame 30.

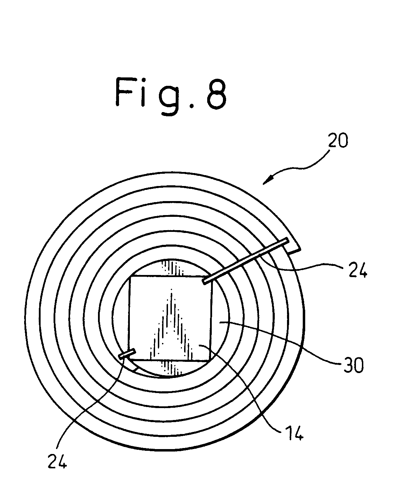

Fig. 8 shows an IC tag formed by winding the wire 18 around the outer circumference of the core accommodating the semiconductor element 14 and then electrically connecting the semiconductor element 14 to the opposite ends of the plane coil 20 via the connection patterns 24.

According to this method, there is an advantage in that the integrity of the semiconductor element 14 with the plane coil 20 is further enhanced since the winding force of the wire 18 can be increased because the semiconductor element 14 is protected by the protective frame 30. The IC tag of this embodiment necessitates no carrier film 22 as shown in Fig. 1(b).

In this regard, if the semiconductor element 14 itself has a sufficient rigidity to withstand the operation for winding the wire 18, it is possible to form the IC tag by flatly winding the wire 18 directly around the semiconductor element 14 which is used as a core without protecting the same by the protective frame 30. When the semiconductor element 14 is used as a core, the wire 18 can be wound around the outer circumference of the semiconductor element 14 in a similar manner as shown in Fig. 7.

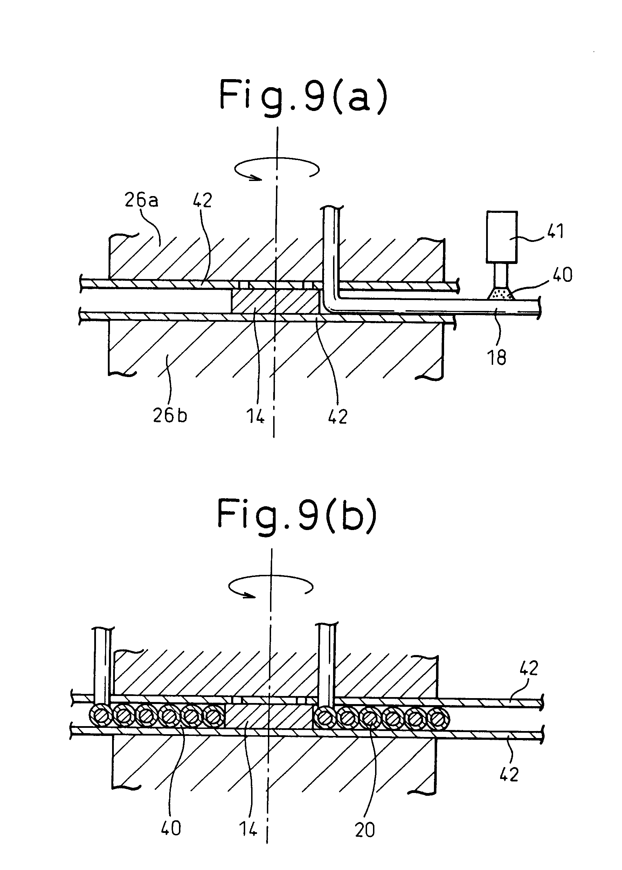

Figs. 9(a) and 9(b) show another method for winding the wire 18 around the outer circumference of the semiconductor element 14 while using the latter as a core. According to this method, the wire 18 is wound while being supplied with an adhesive resinous material to form the plane coil 20. As shown in Fig. 9(a), the winding of the wire 18 around the outer circumference of the semiconductor element 14 is started. Clamp surfaces of the jigs 26a, 26b are covered with films 42, 42 to prevent a resinous material 40 from sticking to the surfaces of the jigs 26a and 26b. The resinous material 40 is supplied from a nozzle 41 to the wire 18 to coat the surface thereof when the wire 18 is drawn into the gap between the rotating jigs 26a, 26b.

In Fig. 9(b), the wire 18 has been wound around the outer circumference of the semiconductor element 14 while being clamped via the films 42 by the jigs 26a, 26b rotating about the center line. The semiconductor element 14 and the wire 18 are bonded together with the resinous material 40 filled between both the films 42 and the outer circumference of the wire 18.

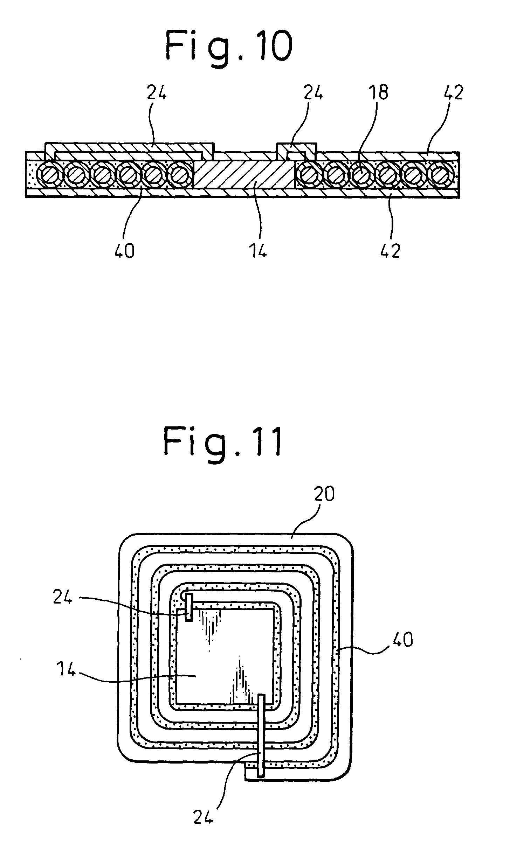

Figs. 10 and 11 show a sectional view and a plan view, respectively, of the planar structure of the IC tag in which the semiconductor element 14 is electrically connected with the opposite ends of the plane coil 20 via the connection patterns 24.

As shown in Fig. 10, the IC tag according to this embodiment includes the plane coil 20 fixed around the semiconductor element 14 with the resinous material 40 wherein opposite sides of the semiconductor element 14 and the plane coil 20 are covered with the films 42. The films 42, 42 are provided for protecting the clamp surfaces of the jigs 26a and 26b (Fig. 9(a)) and left on the resultant product, as they are, while being adhered to the semiconductor element 14 and the plane coil 20 in this embodiment. One of the films 42 is provided with through-holes for exposing the electrodes of the semiconductor element which are electrically connected to the connection patterns 24 by means of the through-holes. Of course, the films 42, 42 may be removed after the plane coil 20 has been formed by the jigs 26a, 26b, to obtain the IC tag not covered with the films 42, 42. Also in the method of this embodiment, the protective frame 30 may be attached to the outer circumference of the semiconductor element 14 and used as a core, around which the wire 18 is wound.

Fig. 12 shows a structure of an IC tag which is easily attachable onto an article such as a piece of freight. The IC tag in this embodiment includes a carrier film 22 to be adhered to the plane coil 20, having an adhesive layer 50a provided on the outer side of the carrier film 22 and covered with a releasable film 50. By providing the adhesive layer 50a on the outer side of the carrier film 22 in such a manner, it is possible to readily adhere the IC tag onto the article of the freight only by releasing the releasable film 50 upon the use, whereby the convenience of the IC tag is furthermore enhanced.

As described above, according to the IC tag and the method for producing the same in the present invention, since the plane coil 20 is formed by flatly winding the wire 18 in combination with the semiconductor element 14, the material cost is low and the production process becomes simple to obtain the IC tag at an extremely low cost. Since the plane coil 20 is formed around the outer circumference of the semiconductor element 14, it is possible to easily obtain the IC tag small in size and in thickness.

The IC tag of the present invention can be provided as an extremely thin IC tag because the plane coil is formed as an antenna pattern around the outer circumference of the semiconductor element by a wire having a diameter substantially equal to or smaller than a thickness of the semiconductor element, as described before. Also, since the plane coil formed by closely winding the wire is disposed close to the outer circumference of the semiconductor element, on IC tag extremely small in size can be obtained. According to the method for producing the IC tag in the present invention, the plane coil is formed by simply winding the wire, resulting in the IC tag effectively produced at a low cost.

## Claims

1. An IC tag comprising:
a plane coil (20) comprising a conductor wire (18) coated with an electrically insulating layer, said wire (18) being wound several times in a plane to form a spiral winding, said plane coil having respective terminal portions and defining a central vacant area encircled by said spiral winding; and,
a semiconductor element (14) having a thickness substantially the same as or less than the thickness of said plane coil (20) and arranged in said central vacant area in said plane, said semiconductor element (14) having electrodes which are electrically connected to said respective terminal portions of the plane coil (20).

2. An IC tag according to claim 1, wherein said semiconductor element (14) is accommodated in a protective frame (30) which has a thickness substantially the same as the thickness of said semiconductor element (14) and is flatly arranged in said central vacant area of the spiral winding.

3. An IC tag according to claim 1, wherein said semiconductor element (14) is supported on, and adhered to, the one of the surfaces of an adhesive film (22) to which said plane coil (20) is also adhered.

4. An IC tag according to claim 3, wherein said adhesive film (22) has first and second adhesive layers on respective surfaces of it, and said plane coil (20) and said semiconductor element (14) are adhered to said first adhesive layer, while said second adhesive layer is covered with a removable film.

5. An IC tag according to claim 1, wherein said semiconductor element (14) is held in position by means of a resin filled in a gap between an outer circumference of said semiconductor element (14) and an inner periphery of said plane coil (20).

6. An IC tag according to claim 1, wherein said semiconductor element (19) is supported in position only by a clamping force exerted by said spiral winding.

7. An IC tag according to any one of the preceding claims, wherein said wire (18) of the plane coil is wound in such a manner that adjacent turns of wire (18) are in contact with one another.

8. An IC tag according to any one of the preceding claims wherein said wire (18) is further coated with a hot-melting or fusing layer (18c) so as to cover said electrically insulating layer of the wire, and, adjacent turns of wire are tightly connected to each other by means of said hot-melted or fused layer (18c).

9. An IC tag according to any one of claims 1 to 7, wherein adjacent turns of wire (18) are connected to each other by means of a resin which is filled in a gap between outer surfaces of said turns of wire (18).

10. An IC tag according to any one of the preceding claims, wherein said electrodes of the semiconductor element (14) are electrically connected to said terminal portions of the plane coil (20) by means of a connecting pattern (24) formed of an electrically conductive paste.

11. A method of producing an IC tag comprising the following steps of:
winding a conductor wire (18) coated with an insulator several times in a plane to define a spiral loop of wire forming a plane coil (20) and a central vacant area encircled by said wire;
adhering a support film (22) to one of surfaces of said plane coil (20) so as to cover at least said central vacant area;
arranging a semiconductor element (14) in said central vacant area of the plane coil so that said semiconductor element (14) is supported by said support film (22) and,
electrically connecting said semiconductor element (14) to said plane coil (20).

12. A method according to claim 11, wherein said wire (18) is wound in such a manner that adjacent turns are in contact with one another.

13. A method of producing an IC tag comprising the following steps of:
clamping a semiconductor element (14) optionally surrounded by a protective frame (30) in a thickness direction thereof between a pair of flat clamping jigs (26);
forming a plane coil (20) by winding a conductor wire (18) coated with an insulator several times within a gap defined between said pair of clamping jigs (26) around an outer circumference of said semiconductor element (14) or protective frame (30) while it is clamped by said jigs (26) so that adjacent turns of wire (18) are in contact with one another; and,
electrically connecting said semiconductor element (14) to said plane coil (20).

14. A method according to claim 13, wherein said wire (18) is further coated with a hot-melting or fusing layer (18c) so as to cover said electrically insulating layer of the wire (18), said plane coil (20) being formed by heating said hot-melting or fusing layer (18c) to connect said adjacent turns of wire (18).
